# EUROPEAN PATENT SPECIFICATION

(11) **EP 3 051 876 B1**
(45) Date of publication and mention of the grant of the patent: **05.05.2021**
(21) Application number: 14845592.6
(22) Date of filing: 19.05.2014
(51) Int. Cl.: H04W 36/30, H04W 36/00, H04W 36/08, H04W 84/04

(54) **SMALL CELL SWITCHING METHOD, ENB AND COMPUTER STORAGE MEDIUM**
KLEINZELLENUMSCHALTVERFAHREN, ENB UND COMPUTERSPEICHERMEDIUM
PROCÉDÉ DE COMMUTATION DE PETITE CELLULE, ENB ET SUPPORT DE STOCKAGE INFORMATIQUE

(30) Priority: 23.09.2013 CN 201310437113
(43) Date of publication of application: 03.08.2016
(73) Proprietor: ZTE Corporation, Shenzhen, Guangdong 518057 (CN)
(72) Inventor: WANG, Xin, Shenzhen Guangdong 518057 (CN); HE, Feng, Shenzhen Guangdong 518057 (CN); HUANG, Yada, Shenzhen Guangdong 518057 (CN)
(74) Representative: Aipex B.V.
(86) International application number: PCT/CN2014/077827
(87) International publication number: WO 2015/039449

(56) References cited:
- EP-A1- 2 941 050
- WO-A1-2015/009075
- WO-A2-2015/019172
- CN-A- 102 461 267
- CN-A- 102 938 894
- CN-A- 103 124 417
- US-A1- 2010 113 031
- CATT: "Discussion on Xn interface between MeNB and SeNB", 3GPP DRAFT; R3-131221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Barcelona, Spain; 20130819 - 20130823 9 August 2013 (2013-08-09), XP050719387, Retrieved from the Internet: URL:http://www.3gpp.org/ftp/tsg_ran/WG3_Iu /TSGR3_81/Docs/ [retrieved on 2013-08-09]
- NEC GROUP: "Cell Selection on Dual Connectivity for Small Cells", 3GPP DRAFT; R1-132337_CELLSELECT_NEC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698103, Retrieved from the Internet: URL:http://www.3gpp.org/ftp/tsg_ran/WG1_RL 1/TSGR1_73/Docs/ [retrieved on 2013-05-11]
- HUAWEI ET AL: "Analysis of Latency Related Issues for UP Protocol Alternatives", 3GPP DRAFT; R2-131786, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700051, Retrieved from the Internet: URL:http://www.3gpp.org/ftp/tsg_ran/WG2_RL 2/TSGR2_82/Docs/ [retrieved on 2013-05-11]
- HUAWEI ET AL: "Considerations on the CP Architecture", 3GPP DRAFT; R2-132878, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 10 August 2013 (2013-08-10), XP050718579, Retrieved from the Internet: URL:http://www.3gpp.org/ftp/tsg_ran/WG2_RL 2/TSGR2_83/Docs/ [retrieved on 2013-08-10]
- NOKIA CORPORATION ET AL: "Discussion on SeNB related RRC procedures", 3GPP DRAFT; R2-132415, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona; 20130819 - 20130823 9 August 2013 (2013-08-09), XP050718165, Retrieved from the Internet: URL:http://www.3gpp.org/ftp/tsg_ran/WG2_RL 2/TSGR2_83/Docs/ [retrieved on 2013-08-09]
- ZTE CORPORATION: "Comparison between CP solution C1 and C2", 3GPP DRAFT; R2-132383 COMPARISON BETWEEN CP SOLUTION C1 AND C2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718152, Retrieved from the Internet: URL:http://www.3gpp.org/ftp/tsg_ran/WG2_RL 2/TSGR2_83/Docs/ [retrieved on 2013-08-09]
- ITRI: "Discussion on Inter-node Radio Resource Aggregation", 3GPP DRAFT; R2-132352, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718125, Retrieved from the Internet: URL:http://www.3gpp.org/ftp/tsg_ran/WG2_RL 2/TSGR2_83/Docs/ [retrieved on 2013-08-09]
- FUJITSU: "Initial analysis on the potential impact of Small Cell UP/CP alternatives on RAN3 specs", 3GPP DRAFT; R3-131340, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Barcelona, Spain; 20130819 - 20130823 9 August 2013 (2013-08-09), XP050719488, Retrieved from the Internet: URL:http://www.3gpp.org/ftp/tsg_ran/WG3_Iu /TSGR3_81/Docs/ [retrieved on 2013-08-09]
- HUAWEI ET AL: "Impact analysis of bearer split options for multi-site aggregation", 3GPP DRAFT; R2-131784, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700049, Retrieved from the Internet: URL:http://www.3gpp.org/ftp/tsg_ran/WG2_RL 2/TSGR2_82/Docs/ [retrieved on 2013-05-11]

## Description

### TECHNICAL FIELD

The present disclosure relates to the technology of mobile communications, and in particular to a method and an eNB for switching a small cell, and a computer storage medium.

### BACKGROUND

With the continuously evolution of the wireless communications technology and protocol standards, a mobile packet service has experienced tremendous development, the data throughput capacity of a single terminal has been gradually enhanced. Taking a Long Term Evolution (LTE) system as an example, it can support downlink data transmission with a maximum rate of 100Mbps in the 20M bandwidth; for a subsequent LTE Advanced (LTE-A) system, a transmission rate of data will further be enhanced, even reaching to 1Gbps.

Both the service capability of a mobile network and deployment strategies are faced with tremendous pressure and challenges due to the enormous increase of the data traffic of terminals. In one aspect, an operator needs to strengthen the existing network deployment and communication technologies, and in another aspect, the operator also desires to accelerate the promotion and development of new network technologies, so as to achieve the purpose of rapid improvement of network performance. However, at present, it is more and more difficult for a mobile communication system to provide affordable, flexible, high-capacity services only by enhancement of a macro network, therefore, a network strategy of deploying a Low Power Node (LPN) to provide small-cell coverage has become a very attractive solution, which is particularly advantageous for enormous amount of data transmission within indoor/outdoor hotspots.

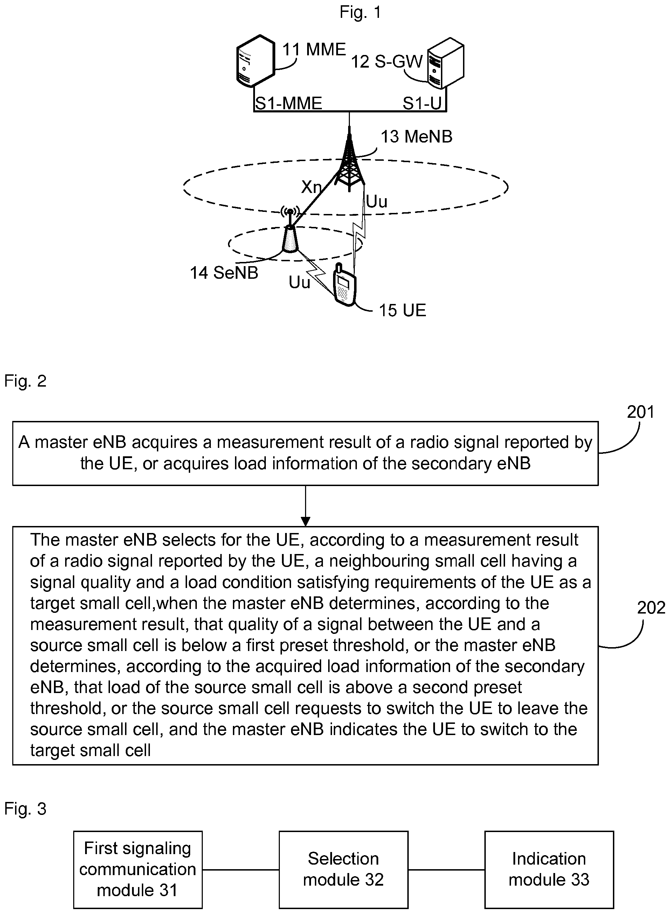

The enhancement in deployment and capability of the LPN is considered as one of the most interesting topics of the future network development by the Third Generation Partnership Program organizations (3GPP). However, in a process that various types of eNBs provide services for User Equipments (UEs) separately, not only many problems exist, but also services requirements such as, enormous amount of data and high mobility, are not satisfied. Therefore, at present, a scene is agreed more in the industry, in which a low power node within a coverage area of a macro eNB or a low power node at the boundary of the macro eNB is deployed, both of them compose an access network in a system architecture and provide data transmission services for a UE; and there is a basic framework mode for the scene. Figure 1 is a schematic diagram of a network architecture of the related art; as shown in Figure 1, an existing network architecture includes following network elements: a Mobility Management Entity (MME) 11 of a Core Network(CN), a Serving-GateWay (S-GW) 12, a Master eNB (MeNB) 13 regarded as a mobility anchor by the CN, a Secondary eNB 14 providing an additional radio resource for the UE 15. The MME 11 is provided with an interface S1-MME; an interface S1-U is provided between the S-GW 12 and the MeNB 13; an interface between the MeNB 13 and the SeNB 14 is tentatively called an interface Xn; the MeNB 13 and the SeNB 14 are provided respectively with a wireless interface Uu with the UE. As seen from Fig. 1, the UE 15 is in a Dual Connectivity (DC) state.

For the UE in the DC state, the main function of the SeNB is to undertake transmission of large amount of data which would have been transmitted by the MeNB, and thus the load of the MeNB is decreased and the performance of a system is upgraded. However, when quality of a signal between the UE in the DC state and MeNB is stable, and quality of a signal between the UE in the DC state and SeNB is decreased (or the resource load of the SeNB is heavy), the UE needs to be switched to leave a small cell of the SeNB, nevertheless, there is no solution of switching the UE to another SeNB cell currently.

EP 2941050 A1, published after the priority date of the present application, relates to a radio communication system, base station, mobile station, communication control method and computer-readable medium.

HUAWEI ET AL: "Analysis of Latency Related Issues for UP Protocol Alternatives" relates to Data Forwarding at SeNB Change, wherein MeNB may request Source SeNB to report the list of SNs of those SDUs/PDUs that are still pending, instead of requesting the forwarding of corresponding SDUs/PDUs from source SeNB to MeNB.

HUAWEI ET AL: "Considerations on the CP Architecture" relates to SeNB switching.

NOKIA CORPORATION ET AL: "Discussion on SeNB related RRC procedures" relates to SeNB related RRC procedures.

ZTE CORPORATION: "Comparison between CP solution C1 and C2" relates to radio bearer in SeNB.

HUAWEI ET AL: "Impact analysis of bearer split options for multi-site aggregation" relates to Small Cell Node changing in S-GW based splitting or in Macro based splitting.

ITRI: "Discussion on Inter-node Radio Resource Aggregation" relates to RB-offloading/establishment issue of inter-node radio resource aggregation.

FUJITSU: "Initial analysis on the potential impact of Small Cell UP/CP alternatives on RAN3 specs" relates to "Xn" interface between MeNB and SeNB.

### SUMMARY

The invention is defined in the claims. Accordingly, it is provided a method and an eNB for small-cell handover, which are capable of switching a UE to a target small cell stably and rapidly.

### BRIEF DESCRIPTION OF THE DRAWINGS

Fig. 1 is a schematic diagram of a network architecture of the related art;
Fig. 2 is a schematic flowchart diagram of a method for small-cell handover according to an embodiment of the present disclosure;
Fig. 3 is a schematic structural diagram of a master eNB according to an embodiment of the present disclosure;
Fig. 4 is a schematic structural diagram of a source secondary eNB according to an embodiment of the present disclosure;
Figs. 5(a) - 5(b) are schematic diagrams of interfaces of a system architecture according to an embodiment of the present disclosure;
Fig. 6 is a schematic flowchart diagram of a method for small-cell handover according to a first embodiment of the present disclosure;
Fig. 7 is a schematic flowchart diagram of a method for small-cell handover according to a second embodiment of the present disclosure; and
Fig. 8 is a schematic flowchart diagram of a method for small-cell handover according to a third embodiment of the present disclosure.

### DETAILED DESCRIPTION

The present disclosure will be further explained in detail below in conjunction with accompany drawings and specific embodiments.

An embodiment of the present disclosure provides a method for small-cell handover, in the embodiment, a control plane connection and a data plane connection are established between a UE and a master eNB to which a macro cell belongs, a data plane connection is established between the UE and a small cell accessed by the UE, the secondary eNB is connected to the master eNB. Fig. 2 illustrates a schematic flowchart diagram of a method for small-cell handover according to the embodiment of the present disclosure. As shown in Fig. 2, the method for small-cell handover includes following steps.

Step 201, the master eNB acquires a measurement result of a radio signal reported by the UE, and/or acquires information of the load of the secondary eNB, wherein the secondary cell is a small cell to which the UE is accessed.

Here, an interface S1-MME is provided between the master eNB and a MME of a core network, and the interface S1-MME can provide stable and reliable radio signal coverage for the UE and exchange control plane signaling and required user plane data with the UE. The master eNB may also be a low power node, such as, a Pico eNB; and the secondary eNB may be a low power node, an interface Xn is provided between the secondary eNB and the master eNB for transmitting a user plane data to the UE.

Here, the master eNB is configured to make a UE accessing the macro cell measure a radio signal and receive a measurement result reported by the UE, or is configured to exchange signaling with a secondary eNB of the small cell to which the UE is accessed and acquire load information of the secondary eNB; furthermore, the load information may include resource usage information of the UE.

Here, the master eNB is not limited to exchange signaling with a secondary eNB to which a small cell belongs which is in the coverage area of the macro cell, and may also exchangea signaling with a node adjacent to the master eNB. Moreover, the master eNB may not only acquire the load information of the secondary eNB, but also acquire information about the resource usage of the secondary eNB or the node adjacent to the master eNB and other information.

Step 202, the master eNB selects for the UE, according to a measurement result of a radio signal reported by the UE, a neighbouring small cell having a signal quality and a load satisfying requirements of the UE as a target small cell, when the master eNB determines, according to the measurement result, that quality of a signal between the UE and a source small cell is below a first preset threshold, or the master eNB determines, according to the acquired load information of the secondary eNB, that load of the source small cell is above a second preset threshold, or the source small cell requests to switch the UE to leave the source small cell; and the master eNB indicates the UE to switch to the target small cell.

In this embodiment and embodiments described below, indicating the UE to switch to the target small cell means that not all of the bearers of the UE are switched to the target small cell. In embodiments of the present disclosure, handover may be only directed to part of the bears of the UE, for example bearers of the UE for the source small cell are switched to the target small cell, and bearers of the UE for the master eNB of the macro eNB may be kept unchanged.

In this embodiment, a control plane connection and a data plane connection are established between the UE and the master eNB; a data plane connection is only established between the UE and the secondary eNB of the small cell to which the UE is accessed, therefore, the master eNB indicates the UE to switch from the source secondary eNB to a target secondary eNB to which the target small cell belongs via control plane signaling.

Specifically, indicating the UE to switch to the target small cell includes:
the master eNB sends a first message for requesting to permit an access of the UE to the target secondary eNB to which the target small cell belongs, and receive a first response message returned by the target secondary eNB; in which:
the first message includes at least: an identity of the UE, an identity of the target small cell, and a bearer-level QoS parameter of at least one offloaded bearer for a source secondary eNB to which the source small cell belongs; and
the first response message includes: information indicating an admission or rejection of handover.

Here, the bearer-level QoS may include: a configuration parameter L2 of the streamed bears for the source secondary eNB, for example, a time duration of a discard timer of the Packet Data Convergence Protocol (PDCP), a Radio Link Control (RLC) mode, and the like.

Here, the target small cell may determine whether to accept the access of the UE and determine the number of QoS parameters of acceptable offloaded bearers of the UE, according to the bearer-level QoS parameter of the at least one offloaded bearer of the UE at the source secondary eNB, and according to the load and the resource usage situation of the target small cell itself.

In a case that the first response message includes information indicating an admission of handover, the first response message further includes an identity and a bearer-level QoS parameter of at least one offloaded bearer which is permitted to be accepted by the target secondary eNB.

Here, the target secondary eNB may accept all of the offloaded bearers of the UE or accept offloaded bearers, at the source eNB, of the UE, depending on the load and resource usage of the target secondary eNB itself.

In a case that the first response message includes information indicating an admission of handover, the method further includes:
the master eNB sends a second message for indicating stopping the transmission of a data packet of the UE, to the source secondary eNB to which the UE is accessed and indicates the UE to access a target secondary eNB to which the target small cell belongs via control plane signaling;
the second message includes at least: an identity of the UE, an identity of the target secondary eNB, and an identity and a bearer-level QoS parameter of at least one offloaded bearer for the target secondary eNB; and
the control plane signaling includes at least: an identity of the target small cell, and an identity and a bearer-level QoS parameter of at least one offloaded bearer which is permitted to be accepted by the target secondary eNB.

Preferably, the method further include: after the UE is switched to the target small cell, the master eNB sends a handover completion message to the source secondary eNB to which the source small cell belongs, and indicates the source secondary eNB to release a context of the UE.

Another implementation mode may be that: after the UE is switched to the target small cell, the target secondary eNB to which the target small cell belongs sends a handover completion message to the source secondary eNB to which the source small cell belongs, and indicates the source secondary eNB to release the context of the UE.

An embodiment of the present disclosure further provides a computer storage medium storing computer executable instructions thereon for implementing a method for small-cell handover according to the embodiment of the disclosure.

In another embodiment of the present disclosure, a UE establishes a control plane connection and a data plane connection with a master eNB and with a secondary eNB to which a small cell belongs respectively, therefore, the source secondary eNB may directly indicate the UE via control plane signaling to switch to the target small cell from the source small cell; and the method for small-cell handover includes:
the source small cell acquires a target small cell selected by the master eNB for the UE, and indicates the UE to switch to the target small cell.

Here, the master eNB configures the UE accessing the macro cell to measure a radio signal and receives a measurement result reported by the UE and thus acquires the quality of a signal between the UE and the source small cell and the quality of a signal between the UE and an adjacent small cell according to the measurement result; the master eNB exchanges signaling with the source secondary eNB to which the source small cell belongs and acquires load information of the source secondary eNB, where the load information includes resource usage information of the UE; and the master eNB selects a neighbouring small cell having a signal quality and a load condition satisfying requirements of the UE as a target small cell for the UE and sends identity information of the target small cell to the source small cell.

Here, indicating the UE to switch to the target small cell includes:
a source secondary eNB to which the source small cell belongs indicates the UE via control plane signaling to access the target small cell; in which:
the control plane signaling includes at least: an identity of the target small cell, and an identity and a bearer-level QoS parameter of at least one offloaded bearer which is permitted to be accepted by a target secondary eNB to which the target small cell belongs.

In this embodiment, before indicating the UE to switch to the target small cell, the method further includes:
a source secondary eNB to which the source small cell belongs sends a data packet which has not been received by the UE and sequence number information of the data packet to the master eNB or a target secondary eNB to which the target small cell belongs, and the master eNB or the target secondary eNB sends the data packet which has not been received by the UE and the sequence number information of the data packet to the UE.

An embodiment of the present disclosure further provides a computer storage medium storing computer executable instructions thereon for executing a method for small-cell handover according to the embodiment of the disclosure.

An embodiment of the present disclosure provides an eNB acting as a master eNB to which a macro cell belongs, Fig. 3 illustrates a schematic structural diagram of a master eNB according to a first embodiment of the present disclosure. As shown in Fig. 3, the eNB includes: a first signaling communication module 31, a selection module 32 and an indication module 33; in which:
the first signaling communication module 31 is configured to receive a measurement result of a radio signal reported by a UE, and is further configured to acquire load information of a source small cell to which the UE is accessed, and is further configured to receive a handover request for switching the UE from the source small cell;
the selection module 32 is configured to, select for the UE, according to the measurement result received by the first signaling communication module 31, a neighbouring small cell having a signal quality and a load condition satisfying requirements of the UE as a target small cell in a case that it is determined that, according to the measurement result received by the first signaling communication module 31, that quality of a signal between the UE and a source small cell is below a first preset threshold, or it is determined that, according to the load information of the secondary eNB acquired by the first signaling communication module 31, that load of the source small cell is above a second preset threshold, or a handover request for switching the UE is received by the first signaling communication module 31 from the source small cell; and
the indication module 33 is configured to indicate the UE to switch to the target small cell.

Here, the indication module 33 is configured to send a first message for requesting to permit an access of the UE to the target secondary eNB to which the target small cell belongs through the first signaling communication module 31, and receive a first response message returned by the target secondary eNB; in which:
the first message includes at least: an identity of the UE, an identity of the target small cell, and a bearer-level QoS parameter of at least one offloaded bearer at a source secondary eNB to which the source small cell belongs; and
the first response message includes: information indicating an admission or rejection of handover.

In a case that the first response message includes the information indicating an admission of handover, the first response message further includes an identity and a bearer-level QoS parameter of at least one offloaded bearer which is permitted to be accepted by the target secondary eNB.

In this embodiment, the indication module 33 is further configured to: in a case that the first response message received by the signaling communication module 31 includes information indicating an admission of handover, send a second message for indicating stopping the transmission of a data packet of the UE through the signaling communication module 31, to the source secondary eNB to which the UE is accessed and indicate the UE to access the target small cell via control plane signaling; in which:
the second message includes at least: an identity of the UE, an identity of the target small cell, and an identity and a bearer-level QoS parameter of at least one offloaded bearer which is permitted to be accepted by the target secondary eNB; and
the control plane signaling includes at least: the identity of the target small cell, and the identity and the bearer-level QoS parameter of the at least one offloaded bearer which is permitted to be accepted by the target secondary eNB.

Preferably, the first signaling communication module 31 is further configured to: send a handover completion message to the source secondary eNB to which the source small cell belongs, and indicate the source secondary eNB to release a context of the UE, after the UE is switched to the target small cell according to the indication of the indication module 33.

It should be understood by the skilled in the art, in the embodiments of the present disclosure, functions of each processing unit of the master eNB can be understood with reference to the related description of the method for small-cell handover described above, each processing unit of the master eNB in the embodiments of the present disclosure may be implemented through an analogue circuit implementing the functions described in the embodiments of the present disclosure, and may be also implemented by a software for implementing the functions described in the embodiments of the present disclosure which is executed on an intelligent terminal.

In the embodiment, in practice, the selection module 32 in the master eNB may be implemented through a Central Processing Unit (CPU), a Digital Signal Processor (DSP) or a Field Programmable Gate Array (FPGA) of the master eNB. In practice, the first signaling communication module 31 in the master eNB may be implemented through a transceiver of the master eNB. In practice, the indication module 33 in the master eNB may be implemented through a combination of the CPU, DSP or FPGA with the transceiver of the master eNB.

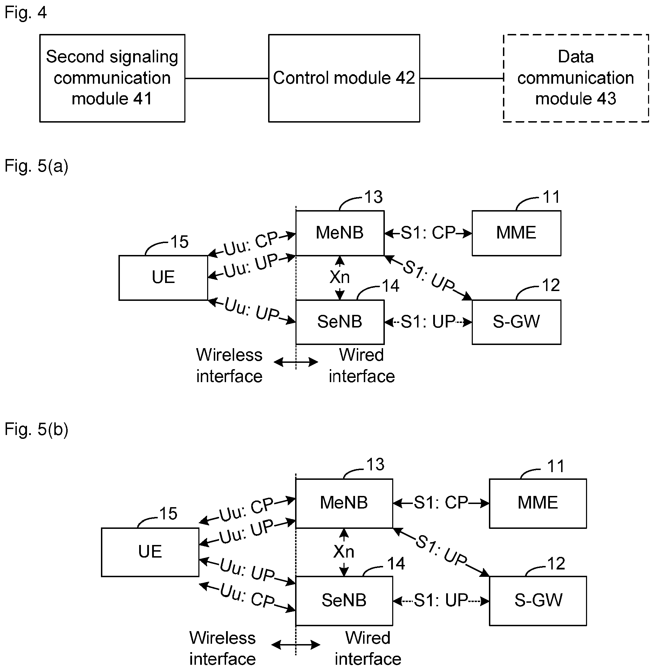

An embodiment of the present disclosure further provides an eNB acting as a secondary eNB to which a small cell belongs within the coverage area of a macro cell, and the secondary eNB is a source secondary eNB to which the UE is accessed; and the UE establishes a control plane connection and a data plane connection with a master eNB to which the macro cell belongs and with the source secondary eNB respectively. Fig. 4 illustrates a schematic structural diagram of a source secondary eNB according to a first embodiment of the present disclosure. As shown in Fig. 4, the eNB includes: a second signaling communication module 41, and a control module 42; in which:
the second signaling communication module 41 is configured to acquire a target small cell selected by the master eNB for the UE; and
the control module 42 is configured to indicate the UE to switch to the target small cell acquired by the second signaling communication module 41.

Here, the control module 42 is configured to indicate the UE to switch to the target small cell through control plane signaling which is from the second signaling communication module 41, in which:
the control plane signaling includes at least: an identity of the target small cell, and an identity and a bearer-level QoS parameter of at least one offloaded bearer which is permitted to be accepted by the target secondary eNB to which the target small cell belongs.

Preferably, the eNB further includes a data communication module 43, which is configured to send a data packet which has not been received by the UE and sequence number information of the data packet to the master eNB or a target secondary eNB to which the target small cell belongs, the master eNB or the target secondary eNB sending the data packet which has not been received by the UE and the sequence number information of the data packet by to the UE.

It should be understood by the skilled in the art, in the embodiments of the present disclosure, functions of each processing unit of the source secondary eNB can be understood with reference to the related description of the method for small-cell handover described above, each processing unit of the source secondary eNB in the embodiments of the present disclosure may be implemented through an analogue circuit implementing the functions described in the embodiments of the present disclosure, and may be also implemented a software for implementing the functions described in the embodiments of the present disclosure which is executed on an intelligent terminal.

In the embodiment, in practice, both the second signaling communication module 41 and the data communication module 43 in the source secondary eNB may be implemented through a transceiver of the source secondary eNB. In practice, the control module 42 in the source secondary eNB may be implemented through a combination of the CPU, DSP or FPGA with the transceiver of the source secondary eNB.

Specifically, as seen from the network architecture shown in the Fig. 1, an interface S1-MME is provided between an MeNB 13 and an MME 11; an interface S1-U is provided between the MeNB 13 and an S-GW 12; an interface Xn is provided between the MeNB 13 and an SeNB 14; a wireless interface Uu is provided between the MeNB 13 and a UE 15, and also between the SeNB 14 and the UE 15. Specifically, Fig. 5(a) and Fig. 5(b) illustrate schematic diagrams of interfaces of the system architecture according to the present disclosure. It can be seen from Fig. 1, Fig. 5(a) and Fig. 5(b) that, in terms of a connection type established specifically by the interface Uu, a User Plane (UP) connection is merely established between the UE 15 and the SeNB 14 rather than a Control Plane(CP) connection, as shown in Fig. 5(a); or as shown in Fig. 5(b), similarly to the connection between the UE 15 and the MeNB 13, both the CP connection and the UP connection are also established between the UE 15 and the SeNB 14; wherein as shown in Fig. 5(a) and Fig. 5(b), the Uu: UP means that a user plane (UP) connection is established via a Uu interface; and Uu: CP means that a control plane (CP) connection is established via an interface Uu. As seen from a data transmission path between an access network node and a CN, UP data may be transmitted directly between the S-GW 12 and the SeNB 14 via an S1-U interface, or may be sent to the MeNB 13 via the interface S1-U, and then forwarded by MeNB 13 to the SeNB 14 via the interface Xn; here, the meaning of S1: UP shown in Fig. 5(a) and Fig. 5(b) depends on the types of the interfaces of the network infrastructure; specifically, S1: UP between the MeNB 13 and the S-GW 12 means that UP data is transmitted via the S1-U interface; S1: UP between the SeNB 14 and the S-GW 12 means that UP data is transmitted via the S1-U interface; and S1: CP between the MeNB 13 and the MME 11 means that CP data is transmitted via the S1-MME interface.

Therefore, the present disclosure is further explained in detail in conjunction with accompanying drawings and specific embodiments from various aspects such as different interface types and different data transmission manners between the UE and the SeNB.

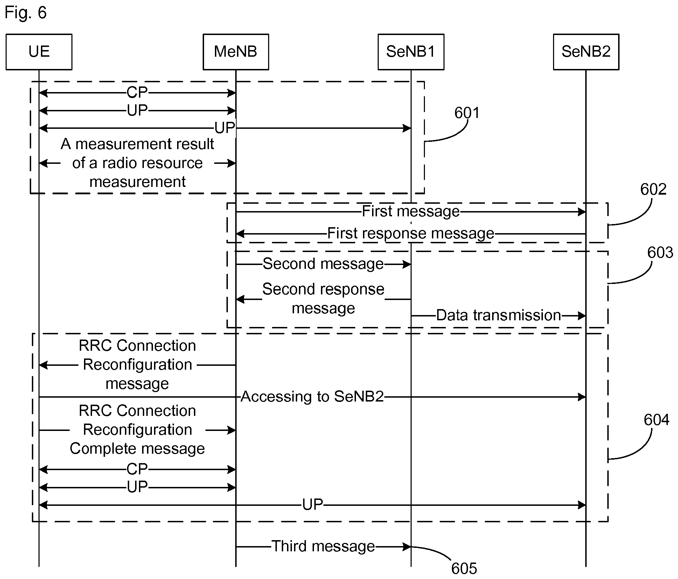

Fig. 6 illustrates a schematic flowchart diagram of a method for small-cell handover according to a first embodiment of the present disclosure, in the embodiment, a UE establishes a CP connection and a UP connection with an MeNB, and also establishes a UP connection with an SeNB, that is, multiple data streams are transmitted between the UE and an access network. The SeNB includes an SeNB1 and an SeNB2, where the SeNB1 is a source SeNB, i.e. an SeNB of a source small cell to which the UE is accessed; and the SeNB2 is a target SeNB, i.e. an SeNB of a target small cell to which the UE is switched. As shown in Fig. 6, the method for small-cell handover includes following steps.

Step 601, the UE establishes a CP connection with the MeNB, so as to receive a control command from a network side and give a feedback; and the UE also establishes a UP connection with the MeNB and the SeNB1, so as to transmit user plane data.

The MeNB configures the UE to measure a radio resource and report a measurement result, so as to perform a handover strategy on the UE in time.

Or, The SeNB1 reports its own load information to the MeNB, such that the MeNB can perform a handover strategy in time for switching the UE accessing the SeNB1.

Step 602, the MeNB selects for the UE a SeNB2 having a signal quality or a radio resource satisfying the UE as a target small cell for keeping the data transmission of offloaded bearer, when the measure result returned to the MeNB by the UE indicates that quality of signal between the UE and the SeNB1 is below a first preset threshold, or when it is determined the load information of the SeNB1 reported to the UE by the SeNB1 is above a second preset threshold, or when the SeNB1 requests the MeNB to switch the UE to leave the small cell of the SeNB1.

Specifically, the MeNB sends a first message to the SeNB2 via an interface between the MeNB and the SeNB2, the first message includes at least: an identity of the UE, an identity of the target small cell, and an identity and a bearer-level Quality of Service (QoS) parameter of the offloaded bearer; the QoS may include: a configuration parameter L2 of the streamed bear at the SeNB1, for example, a time duration of the discard timer of the PDCP, a RLC mode and the like. The first message is to request the SeNB2 to determine whether the access of the UE is acceptable and whether data transmission of at least one offloaded bearer of the UE may be taken.

Correspondingly, upon reception of the first message, the SeNB2 determines whether the access of the UE is acceptable according to information contained in the first message and information of the SeNB2 such as a resource condition and the like. Correspondingly, the SeNB2 sends a first response message to the MeNB, the first response message includes at least: information indicating an admission or rejection of handover.

In a case that the SeNB2 permits the access of the UE, the first response message may further include an identity and a bearer-level QoS parameter of at least one offloaded bearer which is permitted to be accepted by the target secondary eNB, the QoS parameter may be a configuration parameter L2; and in a case that the SeNB2 rejects the access of the UE, the MeNB may select other suitable SeNB as an auxiliary node for the UE for keeping the data transmission of the offloaded bearer.

Step 603, upon reception of a first response message with information indicating an admission of handover returned by the SeNB2, the MeNB sends a second message to the SeNB1 via an interface between the MeNB and the SeNB1; the second message includes at least an identity of the UE and an identity of the SeNB2 cell, and may also include an identity and a bearer-level QoS parameter of at least one offloaded bearer which is permitted to be accepted by the SeNB2, where the QoS parameter may be a configuration parameter L2.

Specifically, for the UE/each offloaded bearer of the UE (data packets of several bearers of the UE are distributed to the SeNB1 for data transmission), the MeNB indicates the SeNB1 to stop transmitting the data packets of the UE. Preferably, the MeNB may indicate the SeNB1 whether a data packet which is not successfully received by the UE and sequence number information of the data packet are needed to be returned to the MeNB or the SeNB2.

Correspondingly, upon reception of the second message, with respect to downlink data, the SeNB1 stops transmitting the data packet of the UE/steamed bearer which is indicated in the second message, and transmits a data packet which has not been received by the UE and sequence number information of the data packet to a SeNB2 according to the indication of the second message, and the SeNB2 sends the data packet which has not been received by the UE and the sequence number information of the data packet to the UE; or the SeNB1 sends the data packet which has not been received by the UE and the sequence number information of the data packet to the MeNB, and then the MeNB sends the data packet which has not been received by the UE and the sequence number information of the data packet to the UE.

Step 604, the MeNB sends a RRC Connection Reconfiguration message which is control plane signaling to the UE through a CP connection between the MeNB and the UE, and indicates the UE to switch away from a SeNB1 cell and to access a SeNB2 cell. The RRC Connection Reconfiguration message includes at least: an identity of the SeNB2, and a configuration parameter L2 of at least one offloaded bearer which is permitted to be accepted by the SeNB2. It should be noted that, the MeNB may send the RRC Connection Reconfiguration message to the UE once after receiving the first response message.

Upon reception of the RRC Connection Reconfiguration message, the UE accesses the SeNB2 cell according to the signaling, and feedbacks a RRC Connection Reconfiguration Complete message to the MeNB after the successful accessing.

For uplink data in streamed transmission, based on the indication of the second message from the MeNB, the received data packet and sequence number information of the received packet which have not been transferred to an upper layer is sent by the SeNB1 to the MeNB and the SeNB2, and then is sent by the MeNB and the SeNB2 for continuous uploading.

In another aspect, according to the user plane architecture on which the embodiments of the present disclosure are based, in a case that streamed data is sent to the SeNB/S-GW by the MeNB, the MeNB performs data tunnel endpoint conversion correspondingly after an SeNB bearing streamed transmission is changed; in a case that streamed data is transmitted directly between the S-GW and the SeNB, after an SeNB bearing streamed transmission is changed, the MeNB needs to notify a corresponding MME, and then the MME notifies the S-GW to convert a tunnel endpoint.

Thus, an SeNB is switched while the CP and UP connection are maintained between the UE and the MeNB, and a new UP connection is established.

Step 605, the MeNB sends a third message to the SeNB1 for indicating the successful handover of the UE; and the SeNB1 can release a context of the UE upon reception of the third message.

It is should be noted that, the third message may also be sent by the SeNB2 to the SeNB1 after the successful access of the UE, the function of which is the same as the function of this step.

In the embodiment, based on information of the UE, such as a radio resource and the like, the MeNB makes a handover decision, and requests the SeNB2 via control plane signaling to accept streamed transmission of the UE, and notifies the SeNB1 to stop data transmission of the stream bearer upon reception of an admission feedback from the SeNB2, and notifies the SeNB1 to send a data packet not successfully received by the UE to the SeNB2. After the successful switching of the UE to the SeNB2, the MeNB may notify the SeNB1 to release a context of the UE, thereby realizing stable and rapid switching of the UE to a target small cell.

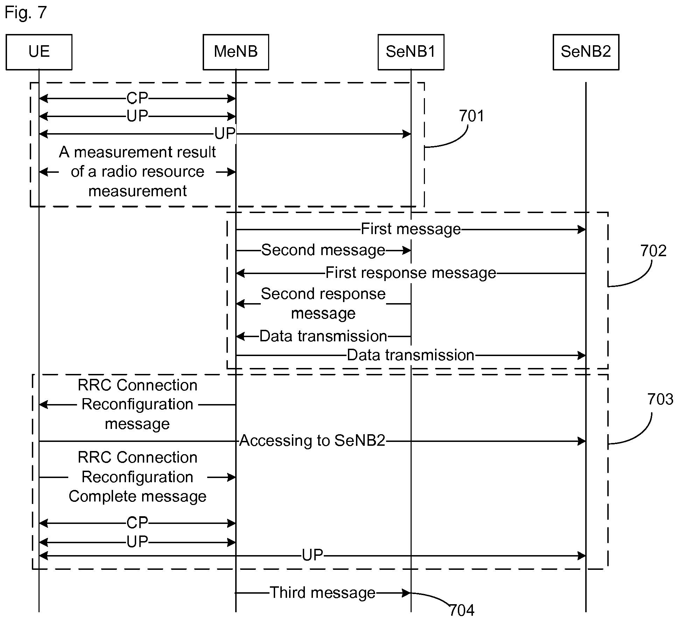

Fig. 7 illustrates a schematic flowchart diagram of a method for small-cell handover according to a second embodiment of the present disclosure, in the embodiment, a UE establishes a CP connection and a UP connection with an MeNB, and also establishes a UP connection with an SeNB, that is, multiple data streams are transmitted between the UE and an access network. The SeNB includes an SeNB1 and an SeNB2, where the SeNB1 is a source SeNB, i.e. an SeNB of a source small cell to which the UE is accessed; and the SeNB2 is a target SeNB, i.e. an SeNB of a target small cell to which the UE is switched. As shown in Fig. 7, the method for small-cell handover includes following steps.

Step 701, a UE establishes a CP connection with an MeNB, so as to receive a control command from a network side and give a feedback; and the UE also establishes a UP connection with the MeNB and the SeNB1, so as to transmit user plane data.

The MeNB configures the UE to measure a radio resource and report a measurement result, so as to perform a handover strategy on the UE in time.

Or, The SeNB1 reports its own load information to the MeNB, such that the MeNB can perform a handover strategy in time for switching the UE accessing the SeNB1.

Step 702, the MeNB selects, for the UE, a SeNB2 having a signal quality or a radio resource satisfying the UE's demand as a target small cell for keeping bearing the data transmission of an offloaded bearer, when the measure result returned to the MeNB by the UE indicates that quality of a signal between the UE and the SeNB1 is below a first preset threshold, or when it is determined the load information of the SeNB1 reported to the UE by the SeNB1 is above a second preset threshold, or when the SeNB1 requests the MeNB to switch the UE to leave the small cell of the SeNB1.

Specifically, in one aspect, the MeNB sends a first message to the SeNB2 via an interface between the MeNB and the SeNB2, the first message includes at least: an identity of the UE, an identity of the target small cell, and an identity and a bearer-level QoS parameter of at least one offloaded bearer; the QoS parameter may include a configuration parameter L2 of the streamed bear at the SeNB1, for example, a time duration of the discard timer of the PDCP, a RLC mode and the like. The first message is used to request the SeNB2 to determine whether an access of the UE is acceptable and whether data transmission of the at least one offloaded bearer of the UE can be undertaken.

In another aspect, while sending the first message, the MeNB sends a second message to the SeNB1 via an interface between the MeNB and the SeNB1, the second message includes at least an identity of the UE, and may also include an identity and a bearer-level QoS parameter of at least one offloaded bearer which is permitted to be accepted by the SeNB2, where the QoS parameter may be a configuration parameter L2. Specifically, for the UE/each offloaded bearer of the UE (data packets of several bearers of the UE are streamed to the SeNB1 for data transmission), the MeNB indicates the SeNB1 to stop transmitting the data packets of the UE. Preferably, the MeNB may indicate the SeNB1 whether a data packet which is not successfully received and sequence number information of the data packet are needed to be sent to the MeNB.

Correspondingly, upon reception of the first message, the SeNB2 determines whether an access of the UE is acceptable according to information contained in the first message and information of the SeNB2 such as a resource condition and the like. Correspondingly, the SeNB2 sends a first response message to the MeNB, the first response message includes at least: information indicating an admission or rejection of handover.

Correspondingly, upon reception of the second message, with respect to downlink data, the SeNB1 stops transmitting the data packet of the UE/steamed bearer which is indicated in the second message, and transmits a data packet which has not been received by the UE and sequence number information of the data packet to a MeNB according to the indication of the second message; and the MeNB sends the transmitted data packet which has not been received by the UE and the sequence number information of the data packet to the UE through a UP connection between the MeNB and the UE; or the MeNB sends the transmitted data packet which has not been received by the UE and the sequence number information of the data packet to the SeNB2 when the UE is admitted to access the SeNB2, and then the SeNB2 sends the data packet which has not been received by the UE and the sequence number information of the data packet to the UE.

In a case that the SeNB2 admits the access of the UE, the first response message may further include an identity and a bearer-level QoS parameter of at least one offloaded bearer which is permitted to be accepted by the SeNB2, the QoS parameter may be a configuration parameter L2; and in a case that the SeNB2 rejects an access of the UE, the MeNB may select other suitable SeNB for the UE as an auxiliary node for keeping bearing streamed-bearer data transmission.

Step 703, the MeNB sends a control plane signaling RRC Connection Reconfiguration message to the UE through a CP connection between the MeNB and the UE, and indicates the UE to switch away from a SeNB1 cell, and access a SeNB2 cell. The RRC Connection Reconfiguration message includes at least: an identity of the SeNB2, and an identity and a bearer-level QoS parameter of at least one offloaded bearer which is permitted to be accepted by the SeNB2, the QoS parameter may be a configuration parameter L2. It should be noted that, the MeNB may send the RRC Connection Reconfiguration message to the UE instantly once receiving the first response message.

Upon reception of the RRC Connection Reconfiguration message, the UE accesses the SeNB2 cell according to the signaling and feedbacks a RRC Connection Reconfiguration Complete message to the MeNB after the successful access.

For uplink data in streamed transmission, based on the indication of the second message from the MeNB, the received data packet and sequence number information of the received packet which have not been transferred to an upper layer are sent by the SeNB1 to the MeNB or the SeNB2, and then is sent by the MeNB or the SeNB2 for continuous uploading.

In another aspect, according to the user plane architecture on which the embodiments of the present disclosure are based, in a case that streamed data is sent to the SeNB/S-GW by the MeNB, the MeNB performs data tunnel endpoint conversion correspondingly after an SeNB bearing streamed transmission is changed; in a case that streamed data is transmitted directly between the S-GW and the SeNB, after an SeNB bearing streamed transmission is changed, the MeNB needs to notify a corresponding MME, and then the MME notifies the S-GW to convert a tunnel endpoint.

Thus, an SeNB is switched while the CP and UP connection are maintained between the UE and the MeNB, and a new UP connection is established.

Step 704, the MeNB sends a third message to the SeNB1 for indicating the successful switching of the UE; and the SeNB1 can release a context of the UE upon reception of the third message.

It is should be noted that, the third message may also be sent by the SeNB2 to the SeNB1 after the successful access of the UE, the function of which is the same as the function of this step.

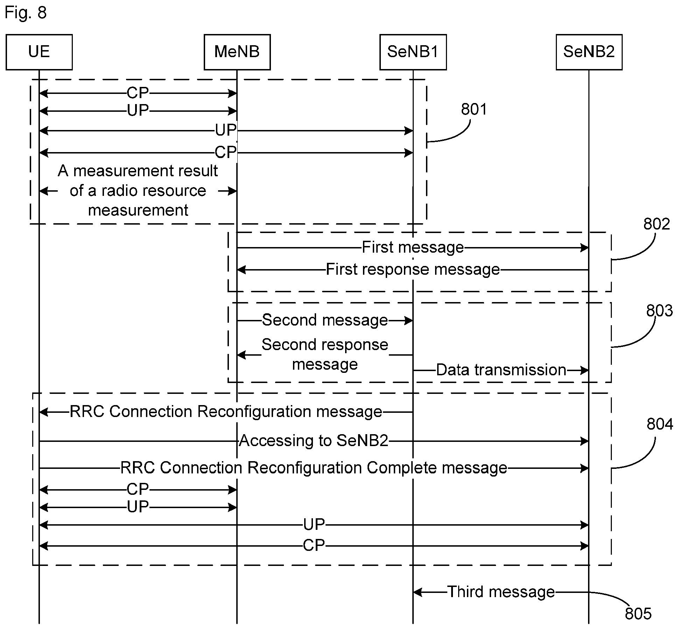

Fig. 8 illustrates a schematic flowchart diagram of a method for small-cell handover according to a third embodiment of the present disclosure, in the embodiment, a UE establishes a CP connection and a UP connection with an MeNB and SeNB respectively, that is, multiple data streams are transmitted between the UE and an access network. The SeNB includes an SeNB1and an SeNB2, where the SeNB1 is a source SeNB, i.e. an SeNB of a source small cell to which the UE is accessed; and the SeNB2 is a target SeNB, i.e. an SeNB of a target small cell to which the UE is switched. As shown in Fig. 8, the method for small-cell handover includes following steps.

Step 801, a UE establishes a CP connection and a UP connection with an MeNB and an SeNB, so as to receive control plane signaling and user plane data, and give a feedback for the control plane signaling.

The MeNB configures the UE to measure a radio resource and report a measurement result, so as to perform a handover strategy on the UE in time.

Or, The SeNB1 reports its own load information to the MeNB, or the MeNB interacts with a neighboring SeNB or a SeNB within the coverage scope of the MeNB for acquiring load information or resource condition of the neighboring SeNB or the SeNB within the coverage scope of the MeNB, such that the MeNB can perform a handover strategy in time for switching the UE accessing the SeNB1 when the load of the SeNB1 is excessive or the SeNB1 actively requests to switch the UE to leave the small cell of the SeNB1.

Step 802, the MeNB selects for the UE a SeNB2 having a signal quality or a radio resource satisfying the UE's demand as a target small cell for keeping bearing offloaded-bearer data transmission, in a case that the measure result returned to the MeNB by the UE indicates that quality of signal between the UE and the SeNB1 is below a first preset threshold, or it is determined the load information of the SeNB1 reported to the UE by the SeNB1 is above a second preset threshold, or the SeNB1 requests the MeNB to switch the UE to leave the small cell of the SeNB1.

Specifically, the MeNB sends a first message to the SeNB2 via an interface between the MeNB and the SeNB2, the first message includes at least: an identity of the UE, an identity of the target small cell, and an identity and a bearer-level QoS parameter of the offloaded bearer; the QoS parameter may include a configuration parameter L2 of the streamed bear at the SeNB1, for example, a time duration of the discard timer of the PDCP, a RLC mode and the like. The first message is used to request the SeNB2 to determine whether an access of the UE is acceptable and whether data transmission of at least one offloaded bearer of the UE can be undertaken.

Correspondingly, upon reception of the first message, the SeNB2 determines whether an access of the UE is acceptable according to information carried in the first message and information of the SeNB2 such as a resource condition and the like. Correspondingly, the SeNB2 sends a first response message to the MeNB, and the first response message includes at least: information indicating an admission or rejection of handover.

In a case that the SeNB2 admits an access of the UE, the first response message may further include: an identity and a bearer-level QoS parameter of at least one offloaded bearer which is permitted to be accepted by the SeNB2, the QoS parameter may be a configuration parameter L2; and in a case that the SeNB2 rejects an accessof the UE, the MeNB may select for the UE other suitable SeNB as an auxiliary node for keeping bearing offloaded-bearer data transmission.

Step 803, upon reception of a first response message with information indicating an admission of handover returned by the SeNB2, the MeNB sends a second message to the SeNB1 via an interface between the MeNB and the SeNB1; the second message includes at least an identity of the UE and an identity of the SeNB2 cell, and may also include an identity and a bearer-level QoS parameter of at least one offloaded bearer which is permitted to be accepted by the SeNB2, where the QoS parameter may be a configuration parameter L2.

Specifically, for the UE/each offloaded bearer of the UE (data packets of several bearers of the UE are streamed to the SeNB1 for data transmission), the MeNB indicates the SeNB1 to stop transmitting the data packets of the UE. Preferably, the MeNB may indicate the SeNB1 whether a data packet which is not successfully received and sequence number information of the data packet are needed to be sent to the MeNB or the SeNB2.

Correspondingly, upon reception of the second message, with respect to downlink data, the SeNB1 stops transmitting the data packet of the UE/steamed bearer which is indicated in the second message, and transmits a data packet which has not been received by the UE and sequence number information of the data packet to a SeNB2 according to the indication of the second message, and the SeNB2 sends the data packet which has not been received by the UE and the sequence number information of the data packet to the UE; or the SeNB1 sends the data packet which has not been received by the UE and the sequence number information of the data packet to the MeNB, and then the MeNB sends the data packet which has not been received by the UE and the sequence number information of the data packet to the UE.

Step 804, the MeNB sends control plane signaling which is a RRC Connection Reconfiguration message to the UE through a CP connection between the MeNB and the UE, and indicates the UE to switch away from a SeNB1 cell, and access a SeNB2 cell. The RRC Connection Reconfiguration message includes at least: an identity of the SeNB2, and a configuration parameter L2 of at least one offloaded bearer which is permitted to be accepted by the SeNB2. It should be noted that, the RRC Connection Reconfiguration message may be sent to the UE instantly once the SeNB 1 receives the second response message.

Upon reception of the RRC Connection Reconfiguration message, the UE accesses the SeNB2 cell according to the signaling, and feedbacks a RRC Connection Reconfiguration Complete message to the MeNB after the successful accessing.

For uplink data in streamed transmission, based on the indication of the second message from the MeNB, the received data packet and sequence number information of the received packet which have not been transferred to an upper layer in order is sent by the SeNB1 to the MeNB or the SeNB2, and then is sent by the MeNB or the SeNB2 for continued uploading.

In another aspect, according to the user plane architecture on which the embodiments of the present disclosure are based, in a case that streamed data is sent to the SeNB/S-GW by the MeNB, the MeNB performs data tunnel endpoint conversion correspondingly after an SeNB bearing streamed transmission is changed; in a case that streamed data is transmitted directly between the S-GW and the SeNB, after an SeNB bearing streamed transmission is changed, the MeNB needs to notify a corresponding MME, and then the MME notifies the S-GW to convert a tunnel endpoint.

Thus, an SeNB is switched while the CP and UP connection are maintained between the UE and the MeNB, and a new UP connection and a new CP connection are established.

Step 805, the SeNB2 sends a third message to the SeNB1 for indicating the successful switching of the UE; and the SeNB1 can release a context of the UE upon reception of the third message.

It should be understood by those skilled in the art that embodiments of the disclosure may provide a method, a system, or a computer program product. Accordingly, the present disclosure can take the form of hardware embodiments, software embodiments, or a combination of forms of embodiment of software and hardware. Furthermore, the present disclosure may take the form of a computer program product which is embodied in one or more computer-usable storage media (including , but not limited to ,a disk storage, optical storage , and the like) having computer-usable program code embodied therein.

The present disclosure is described in accordance with a method, a device (system), and flow charts and/or block diagrams of a program product according to embodiments of the disclosure. It should be understood that each process and/or block in the flowcharts and/or block diagrams, and a combination of flows and blocks in the flowcharts and / or block diagrams are implemented by the computer program instructions. These computer program instructions may be provided to a processor of a general purpose computer, a special purpose computer, an embedded processor or other programmable data processing apparatus to produce a machine, such that a device for implementing the functions specified in a flow or flows of flowcharts or a block or blocks of block diagrams is produced through the instructions which are executed through the processor of the computer or other programmable data processing device.

These computer program instructions may also be stored in a computer readable memory that can direct a computer or other programmable data processing apparatus to be operated in a particular manner, such that the instructions stored in the computer readable memory produce an article of manufacture including instruction means which implement the function in a flow or flows of flowcharts or a block or blocks of block diagrams.

These computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in a flow or flows of flowcharts or a block or blocks of block diagrams.

### INDUSTRIAL APPLICABILITY

According to the embodiments of the present disclosure, a master eNB selects for a UE, according to a measurement result of a radio signal, a neighbouring small cell having a signal quality and a load condition satisfying requirements of the UE as a target small cell, and indicating the UE to switch to the target small cell, in a case that quality of a signal between the UE and a source small cell is below a first preset threshold, or it is determined that load of the source small cell is above a second preset threshold, or the source small cell requests to switch out of the UE, thereby realizing a stable and rapid switching of the UE to the target small cell. Moreover, the technical solutions provided by the embodiments of the present disclosure are adapted to various control plane and user plane architectures, thus interrupted time of data transmission due to the process for switching to the target small cell is shortened, and user experience is improved.

## Claims

1. A method carried out in a master evolved NodeB, eNB, for small-cell handover, wherein a control plane connection and a data plane connection are established between a User Equipment, UE, and the master eNB, to which a macro cell belongs, a data plane connection is established between the UE and a secondary eNB to which a source small cell belongs and to which the UE is accessed, and the secondary eNB is connected to the master eNB;
**characterized by** comprising:
acquiring, by the master eNB, a measurement result of a radio signal reported by the UE, and acquiring load information of the secondary eNB (201); and
selecting for the UE, by the master eNB, according to the measurement result of a radio signal reported by the UE, a neighbouring small cell as a target small cell, wherein the neighbouring small cell has a signal quality and a load satisfying requirements of the UE, when the master eNB determines that quality of a signal between the UE and the source small cell is below a first preset threshold according to the measurement result, or when the master eNB determines that a load of the source small cell is above a second preset threshold according to the acquired load information of the secondary eNB, or when a handover request to switch the UE to leave the source small cell is received from the source small cell; and
indicating, by the master eNB, the UE to switch to the target small cell, wherein bearers of the UE for the source small cell are switched to the target small cell, while bearers of the UE for the master eNB of the macro cell are kept unchanged.

2. The method according to claim 1, wherein indicating the UE to switch to the target small cell comprises:
sending, by the master eNB, a first message for requesting to permit an access of the UE, to a target secondary eNB to which the target small cell belongs; and
receiving, by the master eNB, a first response message returned by the target secondary eNB;
wherein the first message comprises at least: an identity of the UE, an identity of the target small cell, and a bearer-level Quality of Service, QoS, parameter of at least one offloaded bearer for a source secondary eNB to which the source small cell belongs;
the first response message comprises: information indicating an admission or rejection, by the target secondary eNB, of handover.

3. The method according to claim 2, wherein when the first response message comprises the information indicating an admission of handover, the first response message further comprises an identity and a bearer-level QoS parameter of at least one offloaded bearer which is permitted to be accepted by the target secondary eNB.

4. The method according to claim 2, further comprising:
when the first response message comprises the information indicating an admission of handover,
sending, by the master eNB, a second message for indicating stopping transmission of a data packet of the UE, to the source secondary eNB; and
indicating the UE to access the target small cell via control plane signaling; wherein
the second message comprises at least: the identity of the UE, the identity of the target small cell, and an identity and a bearer-level QoS parameter of at least one offloaded bearer which is permitted to be accepted by the target secondary eNB; and
the control plane signaling comprises at least: the identity of the target small cell, and the identity and the bearer-level QoS parameter of the at least one offloaded bearer which is permitted to be accepted by the target secondary eNB.

5. The method according to claim 1, further comprising:
after the UE is switched to the target small cell,
sending, by the master eNB, a handover completion message to the source secondary eNB to which the source small cell belongs; and
indicating the source secondary eNB to release a context of the UE.

6. An evolved Node B, eNB, acting as a master eNB to which a macro cell belongs, the master eNB comprising: a first signaling communication module (31), a selection module (32) and an indication module (33), **characterized in that**:
the first signaling communication module (31) is configured to receive a measurement result of a radio signal reported by a User Equipment, UE, and is further configured to acquire load information of a source small cell to which the UE is accessed, and is further configured to receive from the source small cell a handover request for switching the UE;
the selection module (32) is configured to, select for the UE, according to the measurement result, a neighbouring small cell as a target small cell, wherein the neighbouring small cell has a signal quality and a load satisfying requirements of the UE, when it is determined that quality of a signal between the UE and the source small cell is below a first preset threshold according to the measurement result received by the first signaling communication module (31), or when it is determined that a load of the source small cell is above a second preset threshold according to the load information acquired by the first signaling communication module (31), or when a handover request for switching the UE to leave the source small cell is received from the source small cell by the first signaling communication module (31); and
the indication module (33) is configured to indicate the UE to switch to the target small cell, wherein bearers of the UE for the source small cell are switched to the target small cell, while bearers of the UE for the master eNB of the macro cell are kept unchanged.

7. The eNB according to claim 6, wherein
the indication module (33) is configured to send a first message for requesting to permit an access of the UE to a target secondary eNB to which the target small cell belongs through the first signaling communication module (31), and receive a first response message returned by the target secondary eNB; wherein
the first message comprises at least: an identity of the UE, an identity of the target small cell, and a bearer-level Quality of Service, QoS, parameter of at least one offloaded bearer for a source secondary eNB to which the source small cell belongs; and
the first response message comprises: information indicating an admission or rejection, by the target secondary eNB, of handover;
or,
the first signaling communication module (31) is further configured to send a handover completion message to a source secondary eNB to which the source small cell belongs, and indicate the source secondary eNB to release a context of the UE, after the indication module (33) indicates the UE to switch to the target small cell.

8. The eNB according to claim 7, wherein
when the first response message comprises the information indicating an admission, by the target secondary eNB, of handover, the first response message further comprises: an identity and a bearer-level QoS parameter of at least one offloaded bearer which is permitted to be accepted by the target secondary eNB; or
the indication module (33) is further configured to: when the first response message received by the first signaling communication module (31) comprises the information indicating an admission, by the target secondary eNB, of handover, send a second message for indicating stopping transmission of a data packet of the UE through the first signaling communication module (31) to the source secondary eNB to which the UE is accessed, and indicate the UE to access the target small cell via control plane signaling; wherein
the second message comprises at least: the identity of the UE, the identity of the target small cell, and an identity and a bearer-level QoS parameter of at least one offloaded bearer which is permitted to be accepted by the target secondary eNB; and
the control plane signaling comprises at least: the identity of the target small cell, and the identity and the bearer-level QoS parameter of the at least one offloaded bearer which is permitted to be accepted by the target secondary eNB side.

9. A computer storage medium, storing computer executable instructions thereon, which, when executed by a master evolved NodeB, MeNB, perform the steps of the method for small-cell handover according to any one of claims 1 to 5.

## Patentansprüche

1. Verfahren, das in einem Master-evolved-NodeB (eNB) zur Kleinzellenübergabe ausgeführt wird, wobei eine Steuerebenenverbindung und eine Datenebenenverbindung zwischen einer Benutzereinrichtung (UE) und dem Master-eNB hergestellt werden, zu dem eine Makrozelle gehört, wobei eine Datenebenenverbindung zwischen der UE und einem sekundären eNB hergestellt wird, zu dem eine Quellenkleinzelle gehört und auf welchen die UE Zugriff erhält, und wobei der sekundäre eNB mit dem Master-eNB verbunden ist;
**dadurch gekennzeichnet, dass** es Folgendes umfasst:
Erlangen, durch den Master-eNB, eines Messergebnisses eines Funksignals, das durch die UE berichtet wird, , und Erlangen von Lastinformationen des sekundären eNB (201); und
Auswählen für die UE, durch den Master-eNB, gemäß dem Messergebnis eines Funksignals, das durch die UE berichtet wird einer benachbarten Kleinzelle als eine Zielkleinzelle , wobei die benachbarte Kleinzelle eine Signalqualität und eine Last aufweist, welche Anforderungen der UE erfüllt, wenn der Master-eNB bestimmt, dass eine Qualität eines Signals zwischen der UE und der Quellkleinzelle unter einem ersten voreingestellten Schwellenwert gemäß dem Messergebnis liegt, oder wenn der Master-eNB bestimmt, dass eine Last der Quellkleinzelle über einem zweiten voreingestellten Schwellenwert gemäß den erlangten Lastinformationen des sekundären eNB liegt, oder wenn eine Übergabeanfrage von der Quellkleinzelle empfangen wird, die UE umzuschalten, um die Quellkleinzelle zu verlassen; und
Angeben, durch den Master-eNB, an die UE, auf die Zielkleinzelle umzuschalten, wobei Träger der UE für die Quellkleinzelle auf die Zielkleinquelle umgeschaltet werden, während Träger der UE für den Master-eNB der Makrozelle unverändert bleiben.

2. Verfahren gemäß Anspruch 1, wobei Angeben an die UE, auf die Zielkleinzelle umzuschalten, Folgendes umfasst:
Senden, durch den Master-eNB, einer ersten Meldung zum Anfordern, einen Zugriff der UE zu erlauben, an einen sekundären Ziel-eNB, zu dem die Zielkleinzelle gehört; und
Empfangen, durch den Master-eNB, einer ersten Antwortmeldung, welche durch den sekundären Ziel-eNB zurückgesendet wird;
wobei die erste Meldung mindestens Folgendes umfasst: eine Identität der UE, eine Identität der Zielkleinzelle und einen Quality-of-Service-Parameter (QoS-Parameter) auf Trägerstufe von mindestens einem abgeladenen Träger für einen sekundären Quell-eNB, zu welchem die Quellkleinzelle gehört;
wobei die erste Antwortmeldung Folgendes umfasst:
Informationen, die ein Zulassen oder ein Ablehnen der Übergabe durch den sekundären Ziel-eNB angeben.

3. Verfahren gemäß Anspruch 2, wobei die erste Antwortmeldung ferner eine Identität und einen QoS-Parameter auf Trägerstufe von mindestens einem abgeladenen Träger umfasst, dem erlaubt ist, durch den sekundären Ziel-eNB akzeptiert zu werden, wenn die erste Antwortmeldung die Informationen umfasst, die ein Zulassen einer Übergabe angeben.

4. Verfahren gemäß Anspruch 2, ferner umfassend:
wenn die erste Antwortmeldung die Informationen umfasst, die ein Zulassen der Übergabe angeben,
Senden, durch den Master-eNB, einer zweiten Meldung zum Angeben eines Anhaltens der Übertragung eines Datenpakets der UE an den sekundären Quell-eNB; und
Angeben an die UE, auf die Zielkleinzelle über Steuerebenensignalgebung zuzugreifen; wobei
die zweite Meldung mindestens Folgendes umfasst: die Identität der UE, die Identität der Zielkleinzelle und eine Identität und einen QoS-Parameter auf Trägerstufe von mindestens einem abgeladenen Träger, dem erlaubt ist, von dem sekundären Ziel-eNB akzeptiert zu werden; und
die Steuerebenensignalgebung mindestens Folgendes umfasst: die Identität der Zielkleinzelle und die Identität und den QoS-Parameter auf Trägerstufe des mindestens einen abgeladen Trägers, dem erlaubt ist, von dem sekundären Ziel-eNB akzeptiert zu werden.

5. Verfahren gemäß Anspruch 1, ferner umfassend:
nachdem die UE zu der Zielkleinzelle umgeschaltet ist, Senden, durch den Master-eNB, einer Übergabeabschluss-Meldung an den sekundären Quell-eNB, zu dem die Quellkleinzelle; und
Angeben an den sekundären Quell-eNB, einen Kontext der UE freizugeben.

6. Evolved NodeB (eNB), der als ein Master-eNB agiert, zu dem eine Makrozelle gehört, wobei die Master eNB Folgendes umfasst: ein erstes Signalgebungskommunikationsmodul (31), ein Auswahlmodul (32) und ein Angabemodul (33), **dadurch gekennzeichnet, dass**
das erste Signalgebungskommunikationsmodul (31) dazu konfiguriert ist, ein Messergebnis eines Funksignals zu empfangen, das von einer Benutzereinrichtung (UE) berichtet wird, und ferner dazu konfiguriert ist, Lastinformationen einer Quellkleinzelle zu erlangen, auf welche die UE Zugriff erhält, und ferner dazu konfiguriert ist, von der Quellkleinzelle eine Übergabeanfrage zum Umschalten der UE zu empfangen;
das Auswahlmodul (32) dazu konfiguriert ist, eine benachbarte Kleinzelle gemäß dem Messergebnis als eine Zielkleinzelle für die UE auszuwählen, wobei die benachbarte Kleinzelle eine Signalqualität und eine Last aufweist, welche die Anforderungen der UE erfüllt, wenn bestimmt wird, dass eine Qualität eines Signals zwischen der UE und der Quellkleinzelle unter einem ersten voreingestellten Schwellenwert gemäß dem Messergebnis liegt, das durch das erste Signalgebungskommunikationsmodul (31) empfangen wird, oder wenn bestimmt wird, dass eine Last der Quellkleinzelle über einem zweiten voreingestellten Schwellenwert gemäß den Lastinformationen liegt, die durch das erste Signalgebungskommunikationsmodul (31) erlangt werden, oder wenn eine Übergabeanfrage zum Umschalten der UE, um die Quellkleinzelle zu verlassen, von der Quellkleinzelle durch das erste Signalgebungskommunikationsmodul (31) empfangen wird; und
das Angabemodul (33) dazu konfiguriert ist, der UE anzugeben, zu der Zielkleinzelle umzuschalten, wobei Träger der UE für die Quellkleinzelle zu der Zielkleinquelle umgeschaltet werden, während Träger der UE für den Master-eNB der Makrozelle unverändert bleiben.

7. eNB gemäß Anspruch 6, wobei
das Angabemodul (33) dazu konfiguriert ist, eine erste Meldung durch das erste Signalgebungskommunikationsmodul (31) an eine sekundäre Ziel-eNB zu senden, zu der die Zielkleinzelle gehört, um eine Erlaubnis für einen Zugriff der UE anzufragen, und Empfangen einer ersten Antwortmeldung, welche durch den sekundären Ziel-eNB zurückgesendet wird; wobei
die erste Meldung mindesten Folgendes umfasst: eine Identität der UE, eine Identität der Zielkleinzelle und einen Quality-of-Service-Parameter (QoS-Parameter) von mindestens einem abgeladenen Träger für einen sekundären Quell-eNB, zu dem die Quellkleinzelle gehört; und
wobei die erste Antwortmeldung Folgendes umfasst: Informationen, die ein Zulassen oder ein Ablehnen einer Übergabe durch den sekundären Ziel-eNB angeben;
oder
wobei das erste Signalgebungskommunikationsmodul (31) ferner dazu konfiguriert ist, eine Übergabeabschluss-Meldung an einen sekundären Quell-eNB zu senden, zu dem die Quellkleinzelle gehört, und dem sekundären Quell-eNB anzugeben, einen Kontext der UE freizugeben, nachdem das Angabemodul (33) der UE angibt, auf die Zielkleinzelle umzuschalten.

8. eNB gemäß Anspruch 7, wobei
die erste Antwortmeldung ferner Folgendes umfasst, wenn die erste Antwortmeldung die Informationen umfasst, welche ein Zulassen der Übergabe durch den sekundären Ziel-eNB abgeben: eine Identität und einen QoS-Parameter auf Trägerstufe von mindestens einem abgeladenen Träger, dem erlaubt ist, durch den sekundären Ziel-eNB akzeptiert zu werden; oder
das Angabemodul (33) ferner konfiguriert ist zum: wenn die erste Antwortmeldung, die durch das erste Signalgebungskommunikationsmodul (31) empfangen wird, die Informationen umfasst, die ein Zulassen der Übergabe durch den sekundären Ziel-eNB angeben, Senden einer zweiten Meldung zum Angeben eines Anhaltens einer Übertragung eines Datenpakets der UE durch das erste Signalgebungskommunikationsmodul (31) an den sekundären Quell-eNB, auf welchen auf die UE Zugriff erhält, und Angeben der UE, über eine Steuerebenensignalgebung auf die Zielkleinzelle zuzugreifen; wobei
die zweite Meldung mindestens Folgendes umfasst: die Identität der UE, die Identität einer Zielkleinzelle, und eine Identität und einen QoS-Parameter auf Trägerstufe von mindestens einem abgeladenem Träger, dem erlaubt ist, durch den sekundären Ziel-eNB akzeptiert zu werden; und
wobei die Steuerebenensignalgebung mindestens Folgendes umfasst: die Identität der Zielkleinzelle und die Identität und den QoS-Parameter auf Trägerstufe des mindestens einen abgeladenen Trägers, dem erlaubt ist, durch die sekundäre Ziel-eNB-Seite akzeptiert zu werden.

9. Computerspeichermedium, das computerausführbare Anweisungen darauf speichert, welche die Schritte des Verfahrens zur Kleinzellenübergabe gemäß einem der Ansprüche 1 bis 5 durchführen, wenn sie durch einen Master-evolved-NodeB (MeNB) ausgeführt werden.

## Revendications

1. Procédé mis en œuvre dans un nœud B évolué, eNB, maître pour le transfert de petite cellule, dans lequel une connexion de plan de commande et une connexion de plan de données sont établies entre un équipement utilisateur, UE, et l'eNB maître, auquel appartient une macro-cellule, une connexion de plan de données est établie entre l'UE et un eNB secondaire, auquel appartient une petite cellule source et au niveau duquel on accède à l'UE, et l'eNB secondaire est connecté à l'eNB maître ;
**caractérisé en ce qu'**il comprend :
l'acquisition, par l'eNB maître, d'un résultat de mesure d'un signal radio rapporté par l'UE, et l'acquisition d'informations de charge de l'eNB secondaire (201) ; et
la sélection pour l'UE, par l'eNB maître, en fonction du résultat de mesure d'un signal radio rapporté par l'UE, d'une petite cellule voisine en tant que petite cellule cible, dans lequel la petite cellule voisine a une qualité de signal et une charge qui répondent aux exigences de l'UE, lorsque l'eNB maître détermine que la qualité d'un signal entre l'UE et la petite cellule source est inférieure à un premier seuil prédéfini en fonction du résultat de mesure, ou lorsque l'eNB maître détermine qu'une charge de la petite cellule source est supérieure à un second seuil prédéfini en fonction des informations de charge acquises de l'eNB secondaire, ou lorsqu'une demande de transfert pour commuter l'UE afin de quitter la petite cellule source provient de la petite cellule source ;
et
l'indication, par l'eNB maître, à l'UE de commuter vers la petite cellule cible, dans lequel les supports de l'UE pour la petite cellule source sont commutés vers la petite cellule cible, tandis que les supports de l'UE pour l'eNB maître de la macro-cellule restent inchangés.

2. Procédé selon la revendication 1, dans lequel l'indication à l'UE de commuter vers la petite cellule cible comprend :
l'envoi, par l'eNB maître, d'un premier message de demande d'autorisation d'un accès de l'UE, à un eNB secondaire cible auquel appartient la petite cellule cible ; et
la réception, par l'eNB maître, d'un premier message de réponse renvoyé par l'eNB secondaire cible ;
dans lequel le premier message comprend au moins : une identité de l'UE, une identité de la petite cellule cible et un paramètre de qualité de service, QoS, de niveau de support d'au moins un support déchargé pour un eNB secondaire source auquel appartient la petite cellule source ;
le premier message de réponse comprend : des informations indiquant une autorisation ou un rejet, par l'eNB secondaire cible, d'un transfert.

3. Procédé selon la revendication 2, dans lequel lorsque le premier message de réponse comprend les informations indiquant une autorisation de transfert, le premier message de réponse comprend en outre une identité et un paramètre de QoS au niveau du support d'au moins un support déchargé qui peut être accepté par l'eNB secondaire cible.

4. Procédé selon la revendication 2, comprenant en outre :
lorsque le premier message de réponse comprend les informations indiquant une autorisation de transfert,
l'envoi, par l'eNB maître, d'un second message indiquant l'arrêt de la transmission d'un paquet de données de l'UE, à l'eNB secondaire source ; et
l'indication à l'UE d'accéder à la petite cellule cible par l'intermédiaire d'une signalisation de plan de commande ; dans lequel
le second message comprend au moins : l'identité de l'UE, l'identité de la petite cellule cible et une identité et un paramètre de QoS au niveau du support d'au moins un support déchargé qui peut être accepté par l'eNB secondaire cible ; et
la signalisation de plan de commande comprend au moins : l'identité de la petite cellule cible et l'identité et le paramètre de QoS au niveau du support de l'au moins un support déchargé qui est peut être accepté par l'eNB secondaire cible.

5. Procédé selon la revendication 1, comprenant en outre :
après que l'UE a été commuté vers la petite cellule cible, l'envoi, par l'eNB maître, d'un message d'achèvement de transfert à l'eNB secondaire source auquel appartient la petite cellule source ; et
l'indication à l'eNB secondaire source de libérer un contexte de l'UE.

6. Nœud B évolué, eNB, agissant comme un eNB maître auquel appartient une macro-cellule, l'eNB maître comprenant : un premier module de communication de signalisation (31), un module de sélection (32) et un module d'indication (33), **caractérisé en ce que** :
le premier module de communication de signalisation (31) est configuré pour recevoir un résultat de mesure d'un signal radio rapporté par un équipement utilisateur, UE, et est en outre configuré pour acquérir des informations de charge d'une petite cellule source au niveau de laquelle on accède à l'UE, et est en outre configuré pour recevoir de la petite cellule source une demande de transfert pour la commutation de l'UE ;
le module de sélection (32) est configuré pour sélectionner pour l'UE, en fonction du résultat de mesure, une petite cellule voisine en tant que petite cellule cible, dans lequel la petite cellule voisine a une qualité de signal et une charge qui répondent aux exigences de l'UE, lorsqu'il est déterminé que la qualité d'un signal entre l'UE et la petite cellule source est inférieure à un premier seuil prédéfini en fonction du résultat de mesure reçu par le premier module de communication de signalisation (31), ou lorsqu'il est déterminé qu'une charge de la petite cellule source est supérieure à un second seuil prédéfini en fonction des informations de charge acquises par le premier module de communication de signalisation (31), ou lorsqu'une demande de transfert pour commuter l'UE afin de quitter la petite cellule source est reçue à partir de la petite cellule source par le premier module de communication de signalisation (31) ; et
le module d'indication (33) est configuré pour indiquer à l'UE de commuter vers la petite cellule cible, dans lequel les supports de l'UE pour la petite cellule source sont commutés vers la petite cellule cible, tandis que les supports de l'UE pour l'eNB maître de la macro-cellule restent inchangés.

7. eNB selon la revendication 6, dans lequel
le module d'indication (33) est configuré pour envoyer un premier message pour demander l'autorisation d'un accès de l'UE à un eNB secondaire cible auquel appartient la petite cellule cible par l'intermédiaire du premier module de communication de signalisation (31), et recevoir un premier message de réponse renvoyé par l'eNB secondaire cible ; dans lequel
le premier message comprend au moins : une identité de l'UE, une identité de la petite cellule cible et un paramètre de qualité de service, QoS, au niveau du support d'au moins un support déchargé pour un eNB secondaire source auquel appartient la petite cellule source ; et
le premier message de réponse comprend : des informations indiquant une autorisation ou un rejet, par l'eNB secondaire cible, d'un transfert ;
ou,
le premier module de communication de signalisation (31) est en outre configuré pour envoyer un message d'achèvement de transfert à un eNB secondaire source auquel appartient la petite cellule source, et indiquer à l'eNB secondaire source de libérer un contexte de l'UE, après que le module d'indication (33) a indiqué à l'UE de commuter vers la petite cellule cible.

8. eNB selon la revendication 7, dans lequel
lorsque le premier message de réponse comprend les informations indiquant une autorisation, par l'eNB secondaire cible, d'un transfert, le premier message de réponse comprend en outre : une identité et un paramètre de QoS au niveau du support d'au moins un support déchargé qui peut être accepté par l'eNB secondaire cible ; ou
le module d'indication (33) est en outre configuré pour : lorsque le premier message de réponse reçu par le premier module de communication de signalisation (31) comprend les informations indiquant une autorisation, par l'eNB secondaire cible, d'un transfert, envoyer un deuxième message pour indiquer l'arrêt de la transmission d'un paquet de données de l'UE par l'intermédiaire du premier module de communication de signalisation (31) à l'eNB secondaire source au niveau duquel on accède à l'UE, et indiquer à l'UE d'accéder à la petite cellule cible par l'intermédiaire d'une signalisation de plan de commande ; dans lequel
le deuxième message comprend au moins : l'identité de l'UE, l'identité de la petite cellule cible et une identité et un paramètre de QoS au niveau du support d'au moins un support déchargé qui peut être accepté par l'eNB secondaire cible ; et
la signalisation de plan de commande comprend au moins : l'identité de la petite cellule cible et l'identité et le paramètre de QoS au niveau du support de l'au moins un support déchargé qui peut être accepté par le côté eNB secondaire cible.

9. Support de stockage informatique, stockant sur celui-ci des instructions exécutables par ordinateur qui, lorsqu'elles sont exécutées par un nœud B évolué maître, MeNB, exécutent les étapes du procédé de transfert de petite cellule selon l'une quelconque des revendications 1 à 5.
